(19) **Europäisches Patentamt**
**European Patent Office**
**Office européen des brevets**

(11) **EP 2 102 524 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(21) Anmeldenummer: **07847007.7**

(22) Anmeldetag: **06.12.2007**

(51) Int Cl.:
**F16D 65/21** *(2006.01)* **F16D 55/48** *(2006.01)*

(86) Internationale Anmeldenummer:
**PCT/EP2007/010577**

(87) Internationale Veröffentlichungsnummer:
**WO 2008/068012 (12.06.2008 Gazette 2008/24)**

(54) **SCHEIBENBREMSE MIT ELEKTROMOTORISCHEN AKTUATOR IN SELBSTVERSTÄRKENDER BAUART**

DISK BRAKE COMPRISING A SELF-ENERGIZING ELECTROMOTIVE ACTUATOR

FREIN À DISQUE COMPORTANT UN ACTIONNEUR À MOTEUR ÉLECTRIQUE DE TYPE AUTO-AMPLIFIÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.12.2006 DE 102006057442**

(43) Veröffentlichungstag der Anmeldung:
**23.09.2009 Patentblatt 2009/39**

(73) Patentinhaber: **Knorr-Bremse Systeme für Nutzfahrzeuge GmbH**
**80809 München (DE)**

(72) Erfinder: **MILLER, Bernhard**
**71263 Weil Der Stadt (DE)**

(74) Vertreter: **Mattusch, Gundula**
**C/o Knorr-Bremse AG**
**Moosacherstrasse 80**
**80809 München (DE)**

(56) Entgegenhaltungen:
**EP-A- 0 860 338        WO-A-2007/045430**
**DE-A1- 10 324 424        DE-A1-102005 030 618**

**Beschreibung**

Die Erfindung betrifft eine Scheibenbremse mit elektromotorischem Aktuator, der auf eine Zuspannvorrichtung zum Zuspannen wenigstens eines Bremsbelages in Richtung einer Bremsscheibe einwirkt, wobei die Zuspannvorrichtung eine bremseninterne Hydraulikanordnung aufweist und in selbstverstärkender Bauart ausgelegt ist, wobei die Hydraulikanordnung ferner eine Arbeitseinheit zur Keilwinkelumschaltung des Keilwinkels aufweist, unter dem der Bremsbelag an der Bremsscheibe abgestützt ist.

Scheibenbremsen mit elektromotorischen Aktuatoren, die auf eine Zuspannvorrichtung einwirken sind in verschiedensten Ausgestaltungen bekannt. Es sind auch Scheibenbremsen in selbstverstärkender Bauart bekannt, um den Elektromotor als Antrieb kleiner dimensionieren zu können. Beispiele für derartige Bremsen zeigen die DE 101 05 752 A1 und die DE 103 24 424 A1. Die bekannten Konzepte können in der Praxis nicht überzeugen. Es besteht daher der Bedarf nach neuen Lösungswegen.

Eine Scheibenbremse mit bremseninterner Hydraulikanordnung ist beispielsweise aus der US 4,435,021 oder der DE 195 27 936 A1 bekannt.

Eine weitere Scheibenbremse ist aus der DE 101 05 540 A1 bekannt, in der ein Elektromotor als Aktuator über Kolben auf eine bremseninterne Hydraulikanordnung einwirkt. Diese Scheibenbremse ist aber hinsichtlich ihrer Selbstverstärkungswirkung nur relativ schwer steuer- oder regelbar.

Ein Lösungsansatz zur Steuerung der Selbstverstärkungswirkung besteht darin, den Keilwinkel verstellbar auszugestalten. Es besteht das Problem, eine derartige Keilwinkelverstellung in zuverlässiger und einfacher Weise zu realisieren.

Die Aufgabe der vorliegenden Erfindung besteht darin, dieses Problem zu beheben.

Die Erfindung löst diese Aufgabe durch den Gegenstand des Anspruchs 1.

Vorteilhafte Ausgestaltungen sind den Unteransprüchen zu entnehmen.

So ermöglicht es die Erfindung bei einer selbstverstärkenden Bremse mit elektromotorischem Aktuator, der auf eine Zuspannvorrichtung zum Zuspannen wenigstens eines Bremsbelages in Richtung einer Bremsscheibe einwirkt, wobei die Zuspannvorrichtung eine bremseninterne Hydraulikanordnung mit einem, vorzugsweise zwei Arbeitszylindern aufweist, eine optimale Kraftverstärkung einer solchen Bremse mit Selbstverstärkung und mit einem verstellbaren Neigungs- bzw. Keilwinkel, unter dem der Bremsbelag an der Zuspannvorrichtung abgestützt ist, mittels einer einfach ausgestalteten Arbeitseinheit zu erzielen. Eine bremsverstärkende Wirkung kann nach dem Keileinzugprinzip genutzt werden, während gleichzeitig zu jedem Zeitpunkt einer Bremsung eine beliebige Keilwinkelanpassung in einfacher Weise zuverlässig mittels einer verstellbaren Ventilscheibe in feinen Abstufungen erfolgen kann.

Die Erfindung weist damit eine Einrichtung zur Keilwinkelumschaltung auf, die hydraulisch betätigt ist. Die Arbeitseinheit zur Keilwinkelumstellung ist hierzu mit der verstellbaren Ventilscheibe versehen, welche bevorzugt eine drehbare Ventilscheibe mit zumindest auf einer Kreisbahn angeordneten Durchgangslöchern ist.

In besonders platzsparender Bauweise ist die drehbare Ventilscheibe in der Arbeitseinheit zwischen einem Stufenkolben und einem Druckverstärkungskolben angeordnet, wobei sie Arbeitskammern dieser Kolben untereinander und/oder mit Hydraulikleitungen der Hydraulikanordnung steuerbar verbindet.

Eine Keilwinkeleinstellung ist an sich bei selbstverstärkenden Bremsen aus der DE 103 24 424 A1 bekannt. Dort ist aber eine separate Getriebeanordnung bzw. ein separater Aktuator für die Keilwinkeleinstellung neben der eigentlichen Zuspannvorrichtung zum Zuspannen der Scheibenbremse erforderlich.

Die bremseninterne Hydraulik erklaubt eine ganze Reihe von Ausgestaltungen von Scheibenbremsen mit einem elektromotorischen Aktuator. Der Elektromotor wird z.B. als Antrieb für eine Pumpe genutzt, die auf die bremseninterne Hydraulik einwirkt. Fluidleitungen zur Bremse hin sind damit nicht mehr erforderlich. Es genügt ein Kabel, beispielsweise mit einer Energieversorgungs- und einer Steuerleitung. Dennoch können die Vorteile der Hydraulikbauart damit auch bei einer primär elektromotorisch angetriebenen und über elektrische Signale angesteuerten Bremse genutzt werden.

Diese Pumpe, vorzugsweise eine Zahnradpumpe, dient während einer Bremsung zur Positionierung der drehbaren Ventilscheibe für die Keilwinkelumschaltung. Wahlweise kann diese Zahnradpumpe vorteilhaft auch zur direkten Bremszustellung bei langsamen Änderungen des Bremssollwertes verwendet werden. Dazu ist die Pumpe mit einem Hydraulikmotor zum Antrieb der Ventilscheibe oder mit der Arbeitseinheit zur direkten Bremszustellung mittels eines steuerbaren Ventils, zum Beispiel ein Magnetventil, hydraulisch koppelbar ausgebildet. Ein noch weiterer Vorteil besteht darin, dass diese Pumpe auch zur Betätigung einer Parkbremse und einer Nachstelleinrichtung für Belagverschleißnachführung dienen kann, deren Funktionen in der Scheibenbremse vorteilhaft integriert sind.

Dabei kann auch eine Parkbremsfunktion integriert werden, welche sich nicht auf Hydraulik sondern auf rein mechanischen Komponenten abstützt. Aber auch eine Unterstützung durch die Hydraulik beim Zustellen der Parkbremsfunktion ist vorteilhaft möglich. Mit Hilfe der Arbeitseinheit, aber auch durch Steuermittel, beispielsweise ein Magnetventil, kann die Bremse wieder sicher gelöst werden. Dieses Magnetventil dient auch zur Notlösefunktion, zum Beispiel bei Stromausfall. Vorteilhaft ist auch eine rein mechanische Notlöseeinrichtung, welche mittels der Nachstelleinrichtung realisiert ist.

In einer besonders vorteilhaften Ausgestaltung ist die Ventilscheibe zur Steuerung zumindest einer hydraulischen Kopplung der Pumpe mit einem Hydraulikmotor für die Nachstelleinrichtung ausgebildet. Somit kann die Ventilscheibe auch vorteilhaft weitere Steuerfunktionen in der Scheibenbremse ausführen.

In einer weiteren Ausführungsform ist vorgesehen, dass die Vorrichtung Drucksensoren zur Erfassung von Zuspannkraft und Bremskraft, sowie des Bremsbelagverschleißes aufweist.

Die Vorrichtung ist außerdem mit einem Vorratsdruckkreis mit Ausdehnungsgefäß ausgerüstet, wobei diese Komponenten sich an der Bremse befinden und eine vorteilhaft einfach Hydraulikbauweise ermöglichen.

Es ist außerdem vorteilhaft, wenn die Scheibenbremse eine Steuerungseinrichtung aufweist, insbesondere eine Steuerungseinheit, die entweder direkt an der Bremse angeordnet ist oder als sonstige Steuerungseinrichtung eines übergeordneten Steuerungssystems des Fahrzeugs ausgelegt ist, die dazu ausgelegt ist, bei einer Bremsung zumindest die Keilwinkeleinstellung zu steuern oder zu regeln. Dazu ist die Steuerungseinrichtung zumindest zur Steuerung der Ventilscheibe zur Keilwinkelumschaltung bei einer Bremsung ausgebildet. Die Regelung erfolgt vorzugsweise in Abhängigkeit von der Zustellkraft und dem aktuell eingestellten Keilwinkel. Hierzu sind beispielsweise die Drucksensoren und ein mit der drehbaren Ventilscheibe gekoppelter Winkelsensor mit der Steuerungseinrichtung verbunden.

Es ist bevorzugt, dass die Arbeitseinheit einen Stufenkolben und einen Druckverstärkungskolben aufweist, wobei der Stufenkolben eine stufenförmig angeordnete Reduzierung seiner Kolbendurchmesser aufweist, und vorzugsweise die Flächeninhalte der einzelnen Stufen der Arbeitseinheit in einem festlegbaren Verhältnis ausgebildet sind. Hierbei ist weiterhin vorgesehen, dass die einzelnen Stufen bzw. Arbeitskammern des Stufenkolbens der Arbeitseinheit mit dem Vorratsdruckkreis oder den Arbeitskammern des Druckverstärkungskolbens verbindbar sind. Diese steuerbare Verbindung erfolgt durch die Ventilscheibe in besonders vorteilhafter Weise. Da sie zwischen dem Stufenkolben und dem Druckverstärkungskolben angeordnet ist, ergeben sich vorteilhaft kurze Leitungen für die Hydraulikflüssigkeit. Daraus ergibt sich der Vorteil bei erfindungsgemäßem Einsatz dieser Arbeitseinheit, dass dieser umschaltbare Stufenkolben zu jedem Zeitpunkt während einer Bremsung eine als Umschaltung des Keilwinkels wirksame Anpassung ausführen kann.

Die Erfindung schafft auch den Gegenstand des Anspruchs 11 und realisiert damit einerseits einer Weiterbildung der weiteren in den Ansprüchen genannten Varianten und schafft auch eine vorteilhafte Scheibenbremse mit elektromotorischem Aktuator, der auf eine Zuspannvorrichtung zum Zuspannen wenigstens eines Bremsbelages in Richtung einer Bremsscheibe einwirkt, wobei die Zuspannvorrichtung eine Hebelanordnung mit wenigstens einem oder mehreren Hebel(n) aufweist, wobei der wenigstens eine Hebel in besonderer Weise V-förmig ausgebildet ist. Derart wird eine einfache und unkomplizierte Hebelausgestaltung geschaffen, wobei diese Ausgestaltung durch die Merkmale der Ansprüche 12ff weitergebildet wird.

Dies bringt bauliche und konstruktive Vorteile mit sich, denn die Hebelanordnung ist besonders zuverlässig und sicher. Nach dem Stand der Technik wurden selbstverstärkende Bremsen dagegen in der Regel mit einer Keilanordnung ausgebildet. Diese Variante lässt sich mit der vorstehend erläuterten bremsinternen Hydraulik kombinieren, aber auch mit einer anderen Art von Zuspannvorrichtung ohne Hydraulik.

Die Hebelanordnung steht in Wirkungsverbindung mit dem wenigstens einen Bremsbelag, wobei der wenigstens eine Hebel eine V-förmige Ausgestaltung aufweist, derart, dass er jeweils mit zwei abgerundeten Enden am Bremsbelag und jeweils mit einem abgerundeten Ende an einem Gegenlager, das vorzugsweise ein Arbeitszylinder einer Hydraulikanordnung ist, verschwenkbar gelagert ist.

Nach einer bevorzugten Ausgestaltung ist vorgesehen, dass Hebel vorgesehen sind, die eine V-förmige Ausgestaltung aufweisen, wobei sie vorzugsweise jeweils mit zwei abgerundeten Enden am Bremsbelag und jeweils mit einem abgerundeten Ende an einem Arbeitszylinder verschwenkbar gelagert sind. Ein weiterer Vorteil besteht darin, dass die Hebel jeweils einen Hebelarm zur Zusammenwirkung mit der Arbeitseinheit aufweisen. Dadurch ist ein kraftverstärkender Rückkopplungseffekt auf die Arbeitseinheit möglich, wobei die Stabilität der Hebel vergrößert ist.

Es ist besonders vorteilhaft, wenn die zwei abgerundete Enden des wenigstens einen Hebels auf zueinander geneigten Ablaufflächen des Bremsbelags oder eines Belaghalters des Bremsbelags abrollbar gelagert sind, da somit Reibungswerte zwischen den Ablaufflächen und den Hebelenden besonders gering ausfallen, wodurch die Antriebsleistung des elektromotorischen Aktuators bzw. dessen Aufbau geringer wird.

Nachfolgend wird die Erfindung anhand der in den schematischen Figuren der Zeichnung angegebenen Ausführungsbeispiele näher erläutert. Es zeigt dabei:

Figur 1a    eine Prinzipdarstellung der Selbstverstärkung durch einen Hebel
Figur 1b    eine Prinzipdarstellung der Selbstverstärkung durch einen Keil
Figur 1c    Beispiel eines abrollbar gelagerten Hebels
Figur 2    eine schematische Darstellung eines ersten Ausführungsbeispiels einer unbetätigten Scheibenbremse der vorliegenden Erfindung
Figur 3    eine schematische Darstellung eines zweiten Ausführungsbeispiels einer unbetätigten Scheibenbremse der vorliegenden Erfindung

Figur 4    eine schematische Darstellung des zweiten Ausführungsbeispiels bei Bremsbeginn

Figur 5    eine schematische Darstellung des zweiten Ausführungsbeispiels bei Bremszustellung mit schneller Betätigung

Figur 6    eine schematische Darstellung des zweiten Ausführungsbeispiels bei Bremszustellung mit langsamer Betätigung

Figur 7    eine schematische Darstellung des zweiten Ausführungsbeispiels bei Betätigung der Parkbremse

Figur 8    eine schematische Darstellung des zweiten Ausführungsbeispiels mit aktiver Parkbremse

Figur 9    eine schematische Darstellung des zweiten Ausführungsbeispiels bei Lösung der Parkbremse

Figur 10   eine Prinzipdarstellung des mechanischen Aufbaus des zweiten Aus- führungsbeispiels bei unbetätigter Bremse

Figur 11   die Prinzipdarstellung des mechanischen Aufbaus des zweiten Aus- führungsbeispiels nach Fig. 10 bei Bremsbeginn

Figur 12   die Prinzipdarstellung des mechanischen Aufbaus des zweiten Aus- führungsbeispiels nach Fig. 10 bei aktivem Bremsvorgang

Figur 13   die Prinzipdarstellung des mechanischen Aufbaus einer Nachstellein- richtung für Belagverschleiß des zweiten Ausführungsbeispiels nach Fig. 10

Figur 14   eine Schnittdarstellung einer beispielhaften Anordnung einer Ventil- scheibe in dem Aufbau nach Fig. 10

Figur 15   eine schematische Darstellung der Ventilscheibe für langsame Betäti- gung in Sperrstellung bei dem Beispiel nach Fig. 6

Figur 16   eine schematische Darstellung der Ventilscheibe für schnelle Betäti- gung in Stellung eines ersten Keilwinkels bei dem Beispiel nach Fig. 5

Figur 17   eine schematische Darstellung der Ventilscheibe für schnelle Betäti- gung in Stellung eines zweiten Keilwinkels bei dem Beispiel nach Fig. 5

Gleiche Bezugszeichen gelten für Teile mit gleicher oder ähnlicher Funktion.

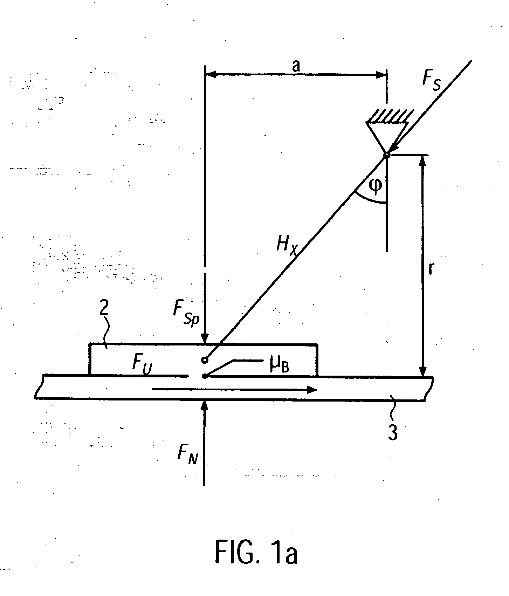

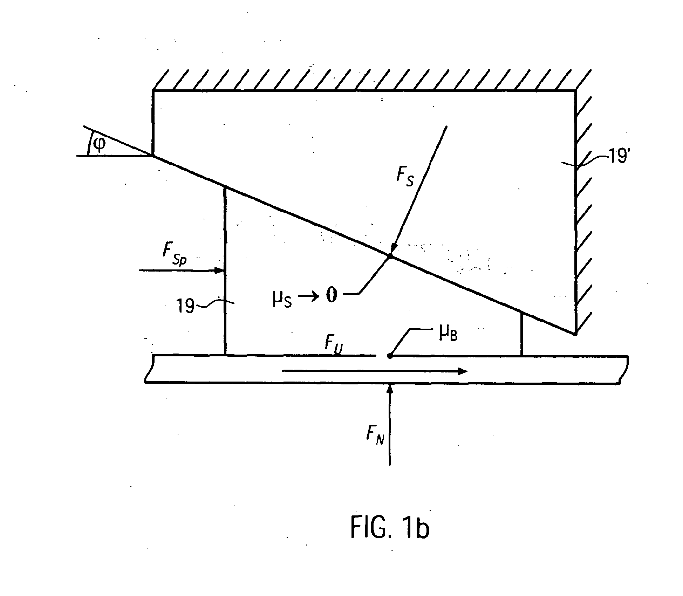

Bei einer Bremse mit Selbstverstärkung stehen generell zwei mechanische Prinzipien zum Einsatz der Selbstverstärkung in der Radbremse zur Verfügung. Das Prinzip des Hebels (Figur 1a) und das des Keils (Fig. 1b). Dabei bedient man sich einer dimensionslosen Kenngröße C* um die Selbstverstärkung beurteilen und vergleichen zu können.

$$C^* = \frac{F_U}{F_{Sp}}$$

$F_U$:    An der Bremsscheibe wirkende Umfangskraft
$F_{sp}$:    Auf den Bremsbelag wirkende Spannkraft
$F_N$:    Normalkraft
$F_S$:    Stützkraft am Gehäuse

Hierzu zeigt Figur 1a eine Prinzipdarstellung der Selbstverstärkung durch einen Hebel Hx. Mit dem Hebelarm r zum Abstützpunkt an einem Bremsbelag 2, der an einer Bremsscheibe 3 anliegt, ergibt sich ein Keilwinkel φ durch a/r. Der Bremsenkennwert C* ergibt sich für einen solchen Aufbau zu:

$$C^* = \frac{1}{\dfrac{1}{\mu_B} - \dfrac{r}{a}}$$

Dieses Prinzip wird heutzutage in etwas abgewandelter Form für Trommelbremsen verwendet. Auch bei modernen Scheibenbremsen kommt dieses Prinzip zum Tragen. Der Unterschied hierbei ist, dass der Winkel 90° beträgt. Dadurch wird die Spannkraft von der Abstützkraft entkoppelt und es entsteht keine selbstverstärkende Wirkung. Die Schwierigkeiten bei selbstverstärkenden Hebelsystemen sind der Belagverschleiß und dessen Nachstellung. Denn mit zunehmendem Verschleiß des Bremsbelags 2 ändern sich auch der Keilwinkel und damit die so genannte Kennung.

Außerdem ändert sich die Übersetzung mit zunehmender Bremskraft in Richtung höherer C* - Werte, denn a wird zunehmend kleiner und r größer. Dadurch neigt die Bremse zum "Zuschnappen". Somit sind Hebelkonstruktionen dieser Art nur sehr schwer zu beherrschen.

Anders als beim Hebelprinzip bleibt beim Keilsystem der Keilwinkel mit zunehmendem Scheiben- und Belagverschleiß und zunehmenden Bremskräften gleich. Hierzu zeigt Fig. 1b eine Prinzipdarstellung der Selbstverstärkung durch einen Keil 19, 19'. Bei kleiner werdendem Bremsbelag 2 rutscht dieser einfach weiter nach innen, der Bewegungsrichtung der Bremsscheibe 3 folgend und kompensiert somit den Belagverschleiß. Diese automatische Belagverschleißnachstellung ist nur in der oben dargestellten Ausführung eines Keils 19, 19' möglich. Diese Ausführung ist in der Praxis jedoch eher selten der Fall, daher ist ein Belagverschleißmechanismus weiterhin erforderlich. Dabei ist es jedoch wichtig, dass der Reibwert $\mu_s$ zwischen den Keilen 19, 19' minimiert wird, um überflüssige Reibung zu verringern.

Bei genauerer Betrachtung lassen sich die beiden Systeme ineinander überführen. Der Unterschied der Systeme liegt in der Lage des Momentanpols. Beim Hebelsystem liegt dieser im Drehpunkt des Hebels, beim Keilsystem im Unendlichen. Man kann das Keilsystem somit als eine Weiterführung des Hebelsystems betrachten, in der die konstruktiven Vorrausetzungen für die Nutzung der kinetischen Fahrzeugenergie optimiert wurden. Der Bremsen-kennwert C* wird demnach durch folgende Formel ermittelt:

$$C* = \frac{\mu_B}{\tan(\alpha) - \mu_B}$$

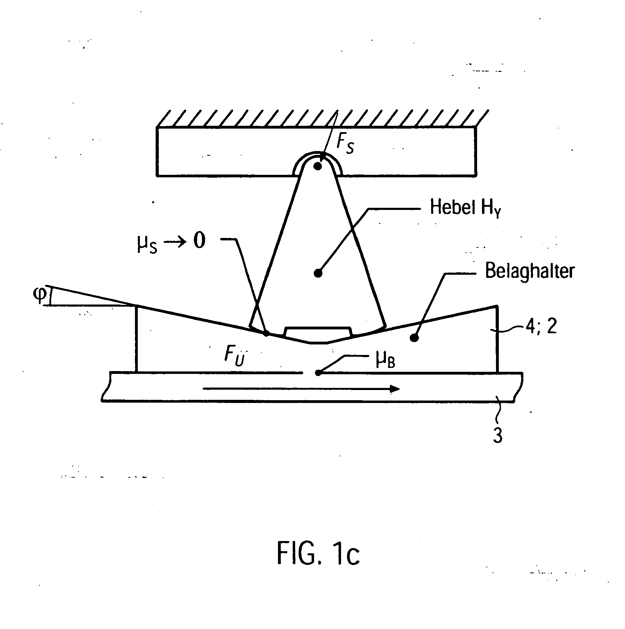

Bei dem der vorliegenden Erfindung zugrunde liegenden Konzept wird das Keilprinzip in abgewandelter Form eingesetzt. Die Vorraussetzung des Keilprinzips, die Reibung $\mu_s$ zwischen den Flächen zu minimieren, wird hier durch abrollbar gelagerte Hebel Hy gewährleistet (s. Fig. 1c). Hierin besteht auch der Unterschied des verwendeten Keils (in Form von Abrollelementen bzw. abgerundeten Enden 11 des Hebels Hy) zur klassischen Ausführung des Keils wie er in Fig. 1b dargestellt ist. Durch das Abrollverhalten der Hebel geht die Reibung $\mu_s$ gegen Null. Das Abrollen der Enden 11 wird durch das Mitschleifen des Belaghalters verursacht. Je nach Reibwert ändern sich die Kräfte und Auslenkungen am Belagträger 4 und somit auch die Kräfte im System.

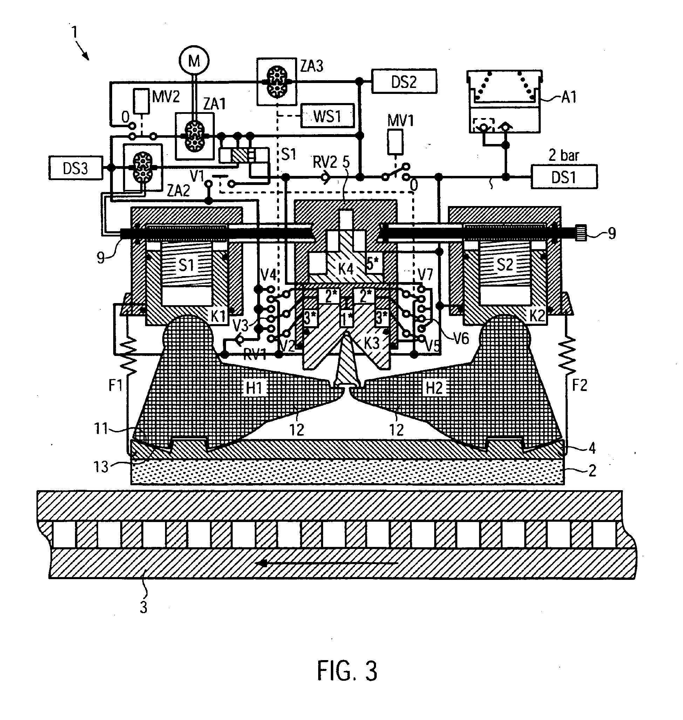

Da die Ablauffläche 13 nicht waagrecht ist, sondern wie z.B. in Fig. 3 gezeigt eine Steigung aufweist, entsteht hier ein Keil. Diese Keilausführung besitzt die identischen Eigenschaften wie die klassische Keilanordnung in Fig. 1b. Auch bei dieser Anordnung ist es möglich, die kinetische Energie des Fahrzeugs größtenteils zur Bremsung zu nutzen.

Zur rein mechanischen Selbstverstärkung des Keils, wird bei dem verwendeten Konzept zusätzlich noch die verstärkende Wirkung der Hydraulikübersetzung benutzt. Bei der hydraulischen Selbstverstärkung wird zusätzlich zum oben beschriebenen Keil noch die horizontale Auslenkung des Belags bzw. des Belagträgers zur Selbstverstärkung genutzt.

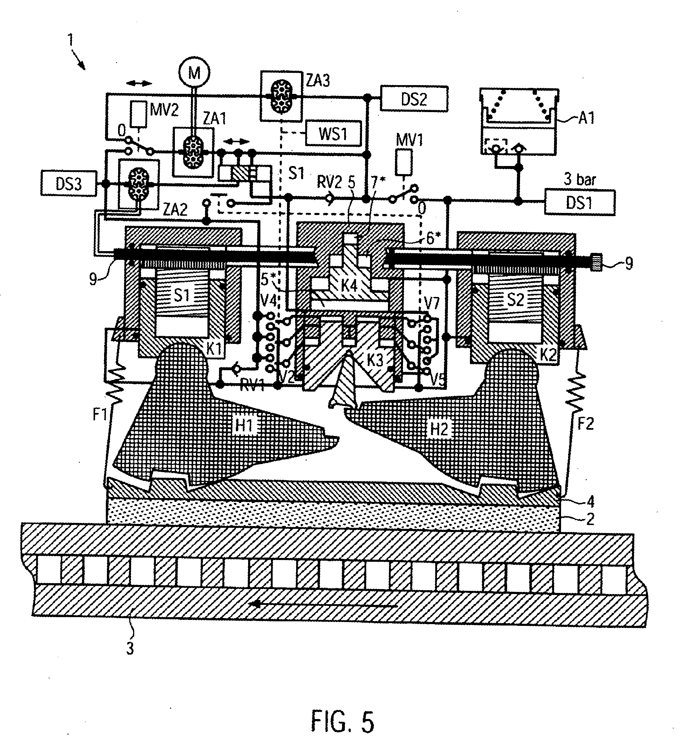

Während für die Erklärung der mechanischen Selbstverstärkung in Fig. 1c der Hebel Hy dafür hinreichend vereinfacht dargestellt wurden, ist für die Erklärung der hydraulischen Selbstverstärkung eine andere Darstellungsweise des Hebels Hy sinnvoll. In Fig. 5 ist zu sehen, dass die Auslenkung des Belagträgers 4 durch einen Hebelarm 12 am Hebel H1, 2 übertragen werden kann. Der Hebelarm wirkt durch die übertragene Auslenkung auf Hydraulikkomponenten, die über ein hydraulisches System die hydraulische Selbstverstärkung verursachen, wie weiter unten noch ausführlich erläutert wird. Dabei wird die Kraft Fs auf den Hebel H1, 2 beeinflusst, indem sie gleich bleibt, verstärkt oder geschwächt wird, wie ebenfalls unten im Detail beschrieben wird.

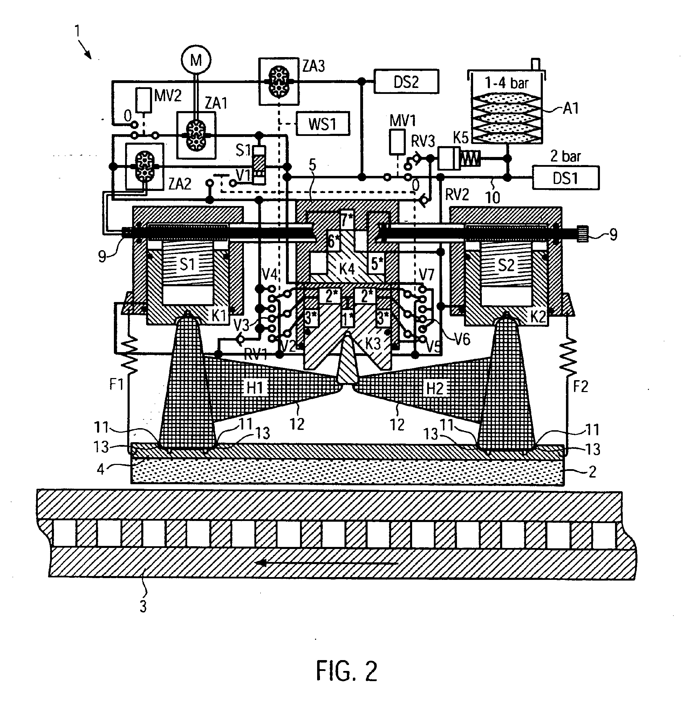

Fig. 2 zeigt eine schematische Darstellung eines ersten Ausführungsbeispiels einer unbetätigten Scheibenbremse der vorliegenden Erfindung.

Eine Zuspannvorrichtung 1 ist hier über dem Bremsbelag 2, der auf dem Belagträger 4 befestigt ist, angeordnet und weist zwei Arbeitszylinder K1, K2 auf, an deren Kolben sich jeweils ein oberes Ende eines Hebels H1, H2 abstützt. Untere Enden der Hebel H1, H2 sind jeweils mit zwei abgerundeten Enden 11 versehen, die jeweils auf einer Ablauffläche 13 auf der Oberseite des Belagträgers 4 abrollbar angeordnet sind. Die Hebel H1, H2 weisen weiterhin Hebelarme 12 auf, welche mit einer Arbeitseinheit 5 zusammenwirken.

Für den Zusammenhalt und die Rückstellung von Bremsbelag 2, der in diesem gezeigten unbetätigten Zustand der Scheibenbremse von der Bremsscheibe 3 gering beabstandet ist, Hebeln H1, H2 und Arbeitszylindern K1, K2 sind Federn F1, F2 vorgesehen.

Die Arbeitszylinder K1, K2 weisen Kolben auf, in denen Spindeln S1, S2 von oben eingeschraubt sind. Die Spindeln S1, S2 sind an ihren oberen Enden jeweils mit einer Verzahnung versehen, die mit einem korrespondierenden Element mit geeigneter Verzahnung eine Nachstelleinrichtung 9 für die Nachstellung auf Grund von Verschleiß des Bremsbelages 2 bildet. Diese Nachstelleinrichtung 9 ist mit einer Zahnradpumpe ZA2 zum Antrieb gekoppelt.

Die Arbeitszylinder K1, K2 sind mit einer Hydraulikanordnung zur Betätigung ihrer Kolben und somit zur Zustellung des Bremsbelags 2 zur Bremsscheibe 3 hin hydraulisch verbunden. Diese Hydraulikanordnung weist die Arbeitseinheit 5 mit einem Stufenkolben K3 und einem Druckverstärkungskolben K4 auf. Der Stufenkolben K3 ist über einen Stößel mit den Hebelarmen 12 der Hebel H1, H2 gekoppelt.

Der Stufenkolben K3 und die Arbeitseinheit 5 bilden Arbeitskammern 1*, 2*, 3* auf der Seite, die der Kopplung mit den Hebelarmen 12 gegenüber liegt. Die Arbeitskammern 1*, 2*, 3* sind hydraulisch an Umschalter V2 bis V7 angeschlossen. Die Umschalter V2 bis V7 sind Bestandteil einer drehbaren Ventilscheibe 6, die weiter unten noch ausführlich beschrieben wird und hier nur durch die Umschalter V2 bis V7 in hydraulischem Schema angedeutet ist. Die Umschalter V2 bis V7 sind weiterhin mit einer Arbeitskammer 4* des Druckverstärkungskolbens K4, einem Vorratsdruckkreis 10 und einer Verbindungsleitung zu einem Umschaltventil MV2 verbunden, dessen Funktion unten erläutert wird. An dieser Verbindungsleitung ist ein weiterer Umschalter V1 der Ventilscheibe 6 angeschlossen, welcher mit einem Schieber S1 in hydraulischer Verbindung steht.

Der Druckverstärkungskolben K4 weist eine weitere Arbeitskammer 5* und Hochdruckkammern 6*, 7* auf, die auf der oberen Seite des Druckverstärkungskolbens K4 zusammen mit der Arbeitseinheit 5, genauer gesagt mit dem Gehäuse 8 der Arbeitseinheit 5 gebildet sind.

Die Hochdruckkammern 6*, 7* des Druckverstärkungskolbens K4 sind mit den Arbeitszylindern K1 und K2 verbunden.

Der Vorratsdruckkreis 10 ist mit einem Vorratsbehälter A 1 versehen, der als Vorrats- und Ausdehnungsgefäß für einen volumenabhängigen Systemdruck in der Hydraulikanordnung sorgt. Außerdem reinigt er die Hydraulikflüssigkeit und nimmt überschüssige auf.

Ein elektromagnetisches Umschaltventil MV 1 in der Hydraulikanordnung wird während der Bremsung aktiviert und dient zum sicheren Lösen der Bremse im Fehlerfall.

Die Ventilscheibe 6 bildet in diesem Beispiel mit einem umlaufenden Zahnkranz in Verbindung mit einem Gegenzahnrad einen in der Hydraulikanordnung angeordneten Zahnradmotor ZA3 und wird von einer Zahnradpumpe ZA1 angetrieben, die ihrerseits mit einem elektromotorischen Aktuator M gekoppelt ist.

Die Arbeitskammern 1* bis 3* des Stufenkolbens K3 sind in ihrer Grundfläche im Größenverhältnis 4:2:1 abgestuft. Dadurch lassen sich die Flächen beliebig kombinieren, so dass hierdurch eine Umschaltung zwischen 8 unterschiedlichen Keilwinkeln ermöglicht wird. In Fig. 2 sind die Kammern 1 und 3 des Stufenkolbens K3 mit dem Vorratsbehälter bzw. Ausdehnungsgefäß A1 verbunden.

Ein Winkelsensor WS1 ist mit der Ventilscheibe 6 gekoppelt und dient zur Messung der Position der drehbaren Ventilscheibe 6. Mit Hilfe von MV2 kann zwischen der Bremsbetätigung durch ständige Keilwinkelumschaltung mittels Ventilscheibe 6 und einer direkten Bremszustellung durch die Zahnradpumpe ZA1 gewählt werden, wie weiter unten noch beschrieben wird.

Der Zahnradmotor ZA2 wird durch Schließen von V1 und Betätigen des Schiebers S 1 angesteuert und dient zur Zustellung des Bremsbelags 2 bei einer Parkbremsfunktion sowie zur Belagverschleißnachstellung.

Der Stufenkolben K3 ist in diesem Beispiel dreistufig ausgeführt und dient mit den Arbeitskammern 1*, 2*, 3*, zur Keilwinkelumschaltung, während der Druckverstärkungskolben K4 eine Druckerhöhung sowie eine synchrone Parallelverstellung der Arbeitszylinder K1 und K2 bewirkt.

Fig. 3 zeigt eine schematische Darstellung eines zweiten Ausführungsbeispiels einer unbetätigten Scheibenbremse der vorliegenden Erfindung. Hierbei sind die Hebel H1, H2 im Gegensatz zum ersten Ausführungsbeispiel nach Fig. 2 in einer unterschiedlichen Ausführung gebildet, wobei deren abgerundete Enden 11 in jeweils einer Ablauffläche 13 angeordnet sind. Die Ablaufflächen 13 sind bei jedem Hebel H1, H2 mit einer entgegengesetzten Neigung gegenüberliegend angeordnet.

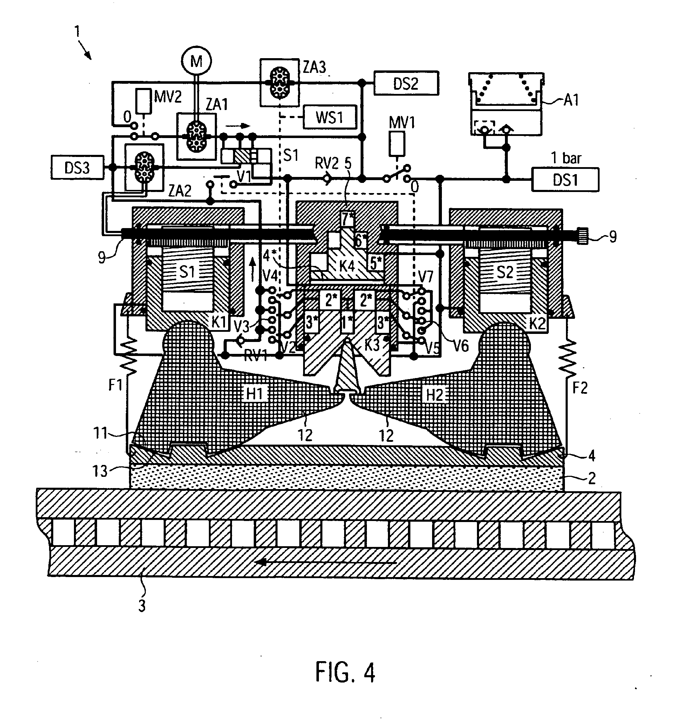

Fig. 4 zeigt das Ausführungsbeispiel nach Fig. 3 bei Bremsbeginn, wobei der Bremsbelag 2 an der Bremsscheibe angelegt ist. Die Funktion wird im Weiteren beschrieben.

Zur Aktivierung der Bremse wird das Elektromagnetventil MV 1 bestromt und mit Hilfe der Zahnradpumpe ZA 1 Öl bzw. Hydraulikflüssigkeit in den Kolbenraum unterhalb K4 gepumpt, welcher auch als Arbeitskammer 4* bezeichnet ist. Dadurch werden die Kolben der Arbeitszylinder K1 und K2 betätigt und damit der Bremsbelag 2 an die Bremsscheibe 3 geführt. Der Druckverstärkungskolben K4 ist aufgeteilt in zwei einzelne Zylinderräume, die Hochdruckkammern 6*, 7*, deren Fläche gleiche Größe aufweisen. Damit wird eine synchrone Betätigung der Kolben der Arbeitszylinder K1 und K2 erreicht.

Im Ruhezustand der Bremse sind alle 3 Zylinderräume, die Arbeitskammer 5* und die Hochdruckkammern 6*, 7*, oberhalb des Kolbens K4 miteinander verbunden. Durch Anheben des Kolbens K4 wird die Verbindung dieser einzelnen Zylinderräume unterbrochen, so dass die Kolben der Arbeitszylinder K1 und K2 nur noch synchron zueinander bewegt werden können. Über einen Rückflußverhinderer bzw. ein Richtungsventil RV1 kann Öl vom Vorratsbehälter A1 über die Zahnradpumpe ZA 1 in die untere Arbeitskammer 5* des Druckverstärkungskolbens K4 gelangen. Ein Drucksensor DS1 misst über den Druck im Ausdehnungsgefäß A1 die vertikale Belagverschiebung.

Mit Berühren der Bremsscheibe 3 wird der Bremsbelag 2 nach links ausgelenkt, wodurch der Stufenkolben K3 nach oben gedrückt wird.

Die Drücke für dieses System werden wie folgt unterschieden und dargestellt.

Versorgungsdruck: ca. 1...4 bar, Zwischendruck max. ca. 130 bar und Hochdruck max. ca. 250 bar.

Durch den oben beschriebenen Vorgang erhöht sich der Druck in der Arbeitskammer 5* unterhalb des Druckverstärkungskolbens K4 sowie in den Arbeitskammern 1*, 2*, 3* oberhalb des Stufenkolbens K3. Mittels Drucksensor DS2 kann das Berühren der Beläge 2 an der Bremsscheibe 3 gemessen werden. Mittels DS3 im Zusammenspiel mit DS2 kann der jeweils aktuelle Reibwert, bzw. der aktuelle Keilwinkel, sowie die aktuelle Bremskraft gemessen werden.

Der Druck in Arbeitskammer 2* des Stufenkolbens K3 steigt und Öl fließt nun über den Umschalter V7 in den Arbeitsraum 5* unterhalb des Druckverstärkungskolbens K4, da ein überkritischer Keilwinkel gewählt ist. Dieser Kolben K4 wiederum bewegt sich nach oben und verstärkt den Druck in den beiden Hochdruckkammer 6*, 7*, wodurch Öl in die Zylinderräume oberhalb der Kolben der Arbeitszylinder K1 und K2 geleitet wird.

Zur weiteren Funktionsbeschreibung wird auf Fig. 5 Bezug genommen, welche eine schematische Darstellung des zweiten Ausführungsbeispiels nach Fig. 3 und 4 bei Bremszustellung mit schneller Betätigung zeigt.

Magnetventil MV2 ist in Ruhelage so angesteuert, dass die Zahnradpumpe ZA1 mit Hydraulikmotor ZA3 der drehbaren Ventilscheibe 6 verbunden ist. Damit kann über die Umschalter V2-V7 ein passender, das heißt bei einem momentan herrschenden Reibwert μ gerade überkritischer Keilwinkel gewählt und der Durchflussquerschnitt in den hydraulischen Umschaltern V2-V7 proportional von Durchgangslöchern 7 der Ventilscheibe 6 eingestellt werden. Der Stufenkolben K3 wird nun mit der dem eingestellten Durchflussquerschnitt entsprechenden Geschwindigkeit nach oben gedrückt. Dies bewirkt eine Erhöhung der Bremskraft.

Ist die gewünschte Bremskraft erreicht, so wird die Ventilscheibe 6 in eine Sperrstellung gedreht, sodass das Öl in den Arbeitsräumen 1* bis 4* der Kolben K3 und K4 eingesperrt ist und diese durch seine weitgehende Inkompressibilität sperrt.

Beim Verringern der Bremskraft wird nun durch Auswahl eines unterkritischen Keilwinkels eine Flächenvergrößerung der wirksamen Arbeitskammern des Stufenkolbens K3 erreicht und Öl vom Arbeitsraum 4* des Druckverstärkungskolbens K4 in die Arbeitskammern 1*, 2*, 3* von Stufenkolben K3 geleitet, was eine Verringerung der Bremskraft bewirkt. Damit kann eine beliebige Bremszustellkraft eingestellt werden.

Durch mehrfaches Umschalten zwischen verschiedenen Keilwinkeln zum Verändern der Bremszustellkraft wird der Bremsbelag 2 horizontal immer weiter ausgelenkt, da bei jeder Verkleinerung der Bremskraft eine vergleichsweise größere Kolbenfläche auf den Stufenkolben K3 wirkt als bei Vergrößerung der Bremskraft. Dadurch verliert der Zwischenkreis (Hydraulikraum zwischen K3 und K4) immer mehr an Öl. Dies kann mit einer Art "Klettermaxeffekt" verglichen werden.

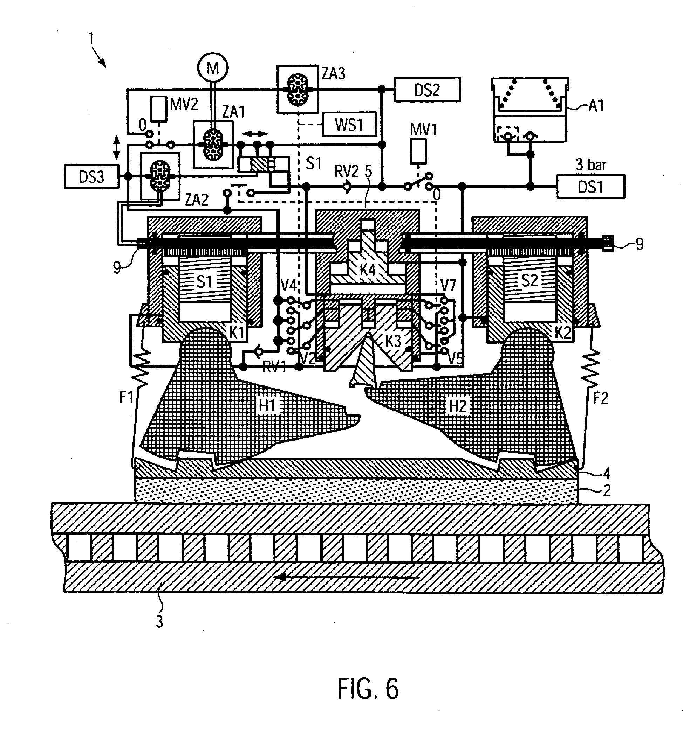

Während eine schnelle Änderung der Zustellkraft durch entsprechende Keilwinkelumschaltung erreicht werden kann, bietet sich für langsame Änderung eine direkte Zustellung mit der Zahnradpumpe ZA1 an. Dieses ist in Fig. 6, welche eine schematische Darstellung des zweiten Ausführungsbeispiels bei Bremszustellung mit langsamer Betätigung zeigt, dargestellt. Hierfür werden die Umschalter der entsprechenden Arbeitskammern mit der Zahnradpumpe ZA1 verbunden. Dadurch kann durch die Zahnradpumpe ZA 1 Öl zwischen den Arbeitskammern von K3 und K4 hin und her gepumpt werden, was einer Erhöhung bzw. Senkung der Bremskraft entspricht. Damit kann auch bei häufigem Ändern der Zustellkraft das Auftreten des oben beschriebenen "Klettermaxeffektes" verhindert werden. Wird diese Art der Bremsbetätigung kombiniert mit einer Keilwinkelumschaltung entgegengesetzt der Keilwinkelwahl, wie sie zur keilwinkelabhängigen Bremsbetätigung verwendet würde, so kann der "Klettermaxeffekt" wieder kompensiert werden.

Zur Entlastung des Pumpenmotors M bei konstanter Zustellkraft (Drehmoment halten im Stillstand), kann durch Umschaltung von MV2 der Pumpendurchfluss gesperrt und damit die Zahnradpumpe ZA1 abgeschaltet werden.

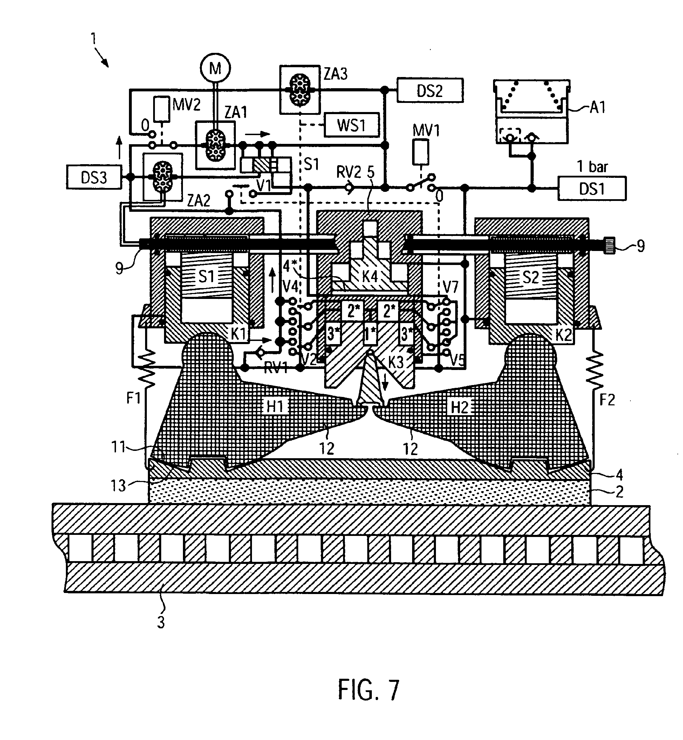

Mit Bezug auf Fig. 7, welche eine schematische Darstellung des zweiten Ausführungsbeispiels bei Betätigung einer Parkbremse zeigt, die Funktion der Park- bzw. Feststellbremse im Folgenden erläutert.

Zur Aktivierung der Parkbremsfunktion wird die Ventilscheibe 6 so verstellt, dass V 1 geschlossen wird. Dadurch kann der Schieber S 1 so eingestellt werden, dass die Zahnradpumpe ZA1 mit dem Zahnradantrieb bzw. Hydraulikmotor ZA2 verbunden ist. Durch Aktivierung der Zahnradpumpe ZA1 kann nun Hydraulikdruck auf den Zahnradmotor ZA2 übertragen werden. Das führt zu einem Herausdrehen der Spindeln S 1 und S2 in den Kolben K1 und K2, wodurch der Bremsbelag 2 an die Bremsscheibe 3 angelegt wird.

Anschließend werden die hydraulischen Umschalter V2-V7 der Ventilscheibe 6 entsprechend Fig. 7 konfiguriert. Nun wird durch Betätigen der Zahnradpumpe ZA1 hydraulischer Druck in den Kolbenräumen von K3 und K4 aufgebaut. Der Kolben K4 verstärkt diesen Druck noch weiter, so dass der Bremsbelag 2 hydraulisch mit maximaler Zustellkraft (250 bar entsprechend 90 kN) gegen die Bremsscheibe 3 gepresst wird. Die Spindeln S 1 und S2 werden nun bis zum Anschlag herausgedreht und können somit ohne große Reibkräfte leicht angezogen werden. Der hydraulische Druck auf den Stufenkolben K3 verhindert eine horizontale Verstellung. Der Drucksensor DS2 sensiert die hydraulische Verspannkraft bzw. die hydromotorische Zustellkraft des Antriebs ZA2. Eine Feder jeweils zwischen Spindel S1, S2 und dem Zylinderraumboden (Hub z.B. 1 mm) garantiert eine Mindestzuspannkraft während des Parkens.

Beim Zustand des Parkens kann der hydraulische Druck weggenommen werden, so dass nun eine rein mechanische Abstützung des Bremsbelags 2 besteht. Die spezielle Formgebung der beiden Hebel H1 und H2, welche ein nahezu reibungsloses Abrollen der Hebel H1, H2 ermöglicht, wirkt wie eine in beide Laufrichtungen sich selbst zuziehende Keilbremse mit überkritischem Keilwinkel, was bei einer eventuellen Reduzierung der mechanischen Zuspannkraft, ein selbstverstärkendes Bremsverhalten erzeugt.

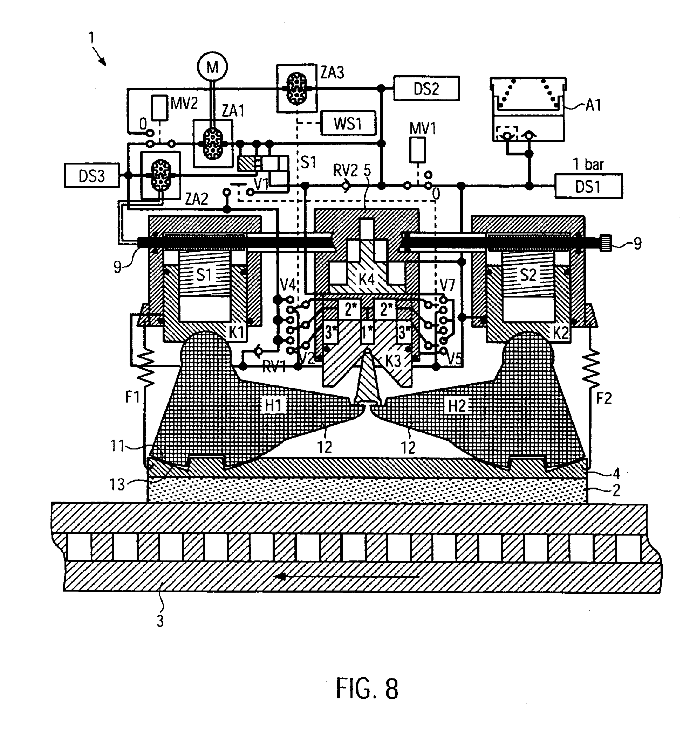

Durch die Ventilscheibe 6 werden nun die Umschalter V2, V3, V4 so eingestellt, dass alle Kammern des Kolbens K3 mit dem Vorratsbehälter A 1 verbunden sind. Dieses ist in Fig. 8 (Parkbremse aktiv) gezeigt. Dadurch ist der Kolben K3 nahezu frei beweglich und kann somit eine freie Bewegung der Hebel H1, H2 und das selbstverstärkende Bremsverhalten ermöglichen. Durch die Verbindung der Zahnradpumpe ZA 1 mit ZA2 sind die beiden Spindeln S 1 und S2 so drehbar, dass die Bremse im Notfall (z.B. bei Stromausfall) von Hand über eine Notlöseeinrichtung gelöst werden kann.

Durch den Drucksensor DS 1 kann in diesem Zustand eine Abweichung vom Regeldruck erkannt und angezeigt werden. Dadurch kann ein eventueller Belagverschleiß oder Ölverlust frühzeitig ermittelt werden.

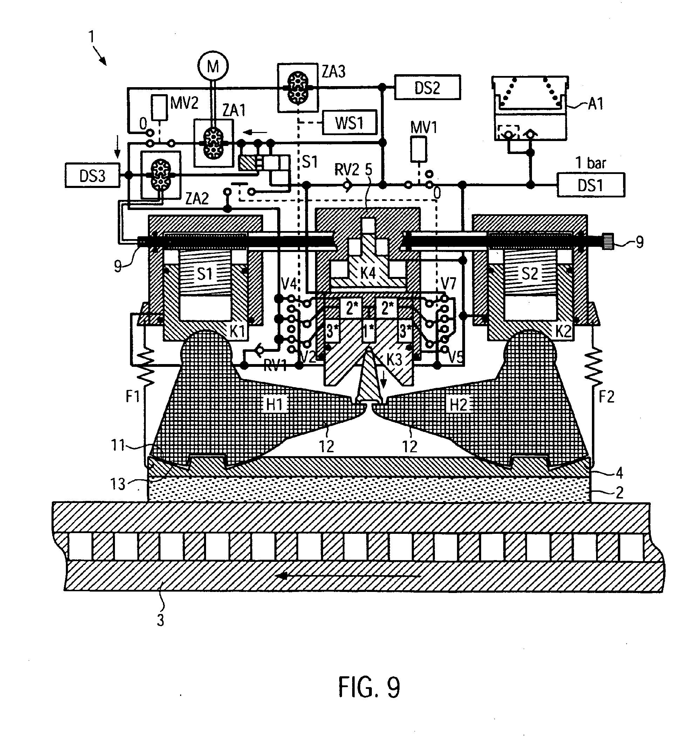

Zum Lösen der Feststellbremse, wozu auf Fig. 9 Bezug genommen wird, wird die Ventilscheibe so positioniert, dass die hydraulischen Umschalter V2-V7 entsprechend Fig. 9 konfiguriert sind.

Damit kann mittels Aktivierung der Zahnradpumpe ZA1 der Zahnradmotor ZA2 in umgekehrter Laufrichtung angesteuert werden, was zum Hineindrehen der Spindeln S 1 und S2 in die Kolben der Arbeitszylinder K1 und K2 führt und damit den Bremsbelag 2 wieder von der Bremsscheibe 3 löst.

Zur Unterstützung dieses Bremsenlösens wird, wie bereits bei Anlegen der Parkbremse, gleichzeitig der gesamte Kolbenraum von K3 und K4 mit Druck beaufschlagt, welches durch den Kolben K4 druckverstärkt wird. Damit können die Spindeln S1 und S2 mit wenig Kraftaufwand wieder gelöst werden.

Simultan wird der Stufenkolben K3 durch den Druckaufbau in dessen Arbeitskammern nach außen (hier: nach unten) gedrückt, was mit einem gleichzeitigen Zurückfahren der Kolben der Arbeitszylinder K1 und K2 eine eventuell erfolgte horizontale Belagverschiebung infolge Zuziehens rückgängig macht.

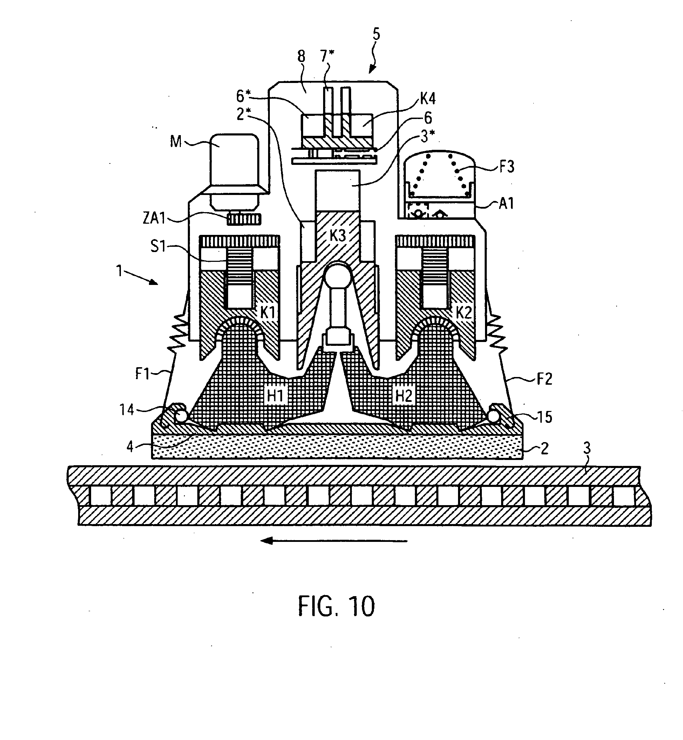

Zur Darstellung eines Prinzips eines mechanischen Aufbaubeispiels zeigt Fig. 10 eine Prinzipdarstellung des mechanischen Aufbaus des zweiten Ausführungsbeispiels bei unbetätigter Bremse.

An den Seiten des Belagträgers 4 sind in diesem Beispiel Kanten 15 angeformt, welche mit Zylinderrollen 14 in Kontakt stehen, die ihrerseits mit Endabschnitten der abgerundeten Enden 11 der Hebel H1, H2 in Kontakt stehen. Dadurch wird eine Kraftübertragung in seitlicher Richtung vom Belagträger 4 auf die Hebel H1, H2 mit geringerer Reibung erzielt.

Die Hydraulikanordnung ist in dem Gehäuse 8 der Arbeitseinheit 5 kompakt und platzsparend angeordnet. Der Vorratsbehälter A1 ist mit einer Feder F3, vorzugsweise einer Druckfeder, zur Druckerzeugung des Vorratsdruckkreises 10 ausgerüstet.

Um die mechanische Anordnung der Komponenten zu verdeutlichen wird im Folgenden eine beispielhafte Komponentenanordnung angegeben.

In Fig. 10 ist zu sehen, dass die drehbar angeordnete Ventilscheibe 6 räumlich zwischen dem Stufenkolben K3 und dem Druckverstärkungskolben K4 angeordnet ist. Damit können kurze und einfach zu realisierende Verbindungen zwischen den Zylinderräumen 1*, 2*, 3* des Stufenkolbens K3 und den Umschaltern V 1-V7 zum unteren Arbeitsraum 4* des Druckverstärkungskolbens K4 hergestellt werden.

Der Ausdehnungsbehälter A 1 beinhaltet auch einen Ölfilter und ist in der Art eines PKW-Ölfilters ausgeführt. Damit ist ein einfaches Wechseln des Öls (z.B. zusammen mit dem Belagwechsel) möglich. Da infolge des Belagverschleißes immer mehr Öl in den beiden Kolbenräumen der Arbeitszylinder K1, K2 eingelagert wird, findet über der Betriebsdauer ein ständiger Ölwechsel statt, das heißt es strömt immer wieder neues Öl aus dem Ausdehnungs- bzw. Vorratsbehälter A 1 nach.

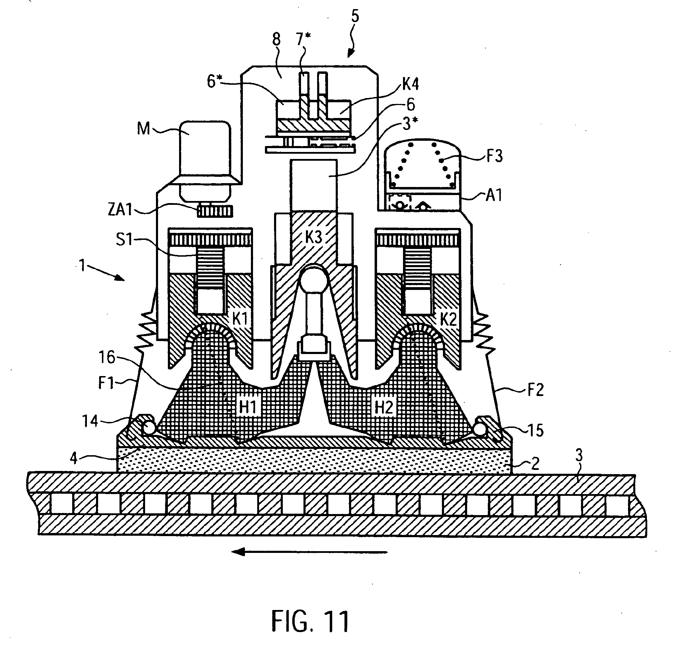

Während der Fahrt bzw. im unbetätigten Zustand sind die Beläge 2 in einem vordefiniertem Abstand, dem so genannten Lüftspiel, zur Bremsscheibe 3 positioniert, was in Fig. 11 dargestellt ist.

Der Berührungspunkt kann sehr präzise gemessen werden, mit der Erkennung des Druckanstieges an DS2, infolge der Belagmitnahme durch den Keilwinkeleinzug. In Fig. 11 ist das Anlegen des Belags zu sehen. Eine für die jeweilige Fahrtrichtung angebrachte Zylinderrolle 14 sorgt für eine reibungsverlustarme Bremskraftumleitung auf den Hebel H2. Ein Großteil dieser Bremskraft wird über Hebel H2 an den Kolben des Arbeitszylinders K2 übertragen und über dessen Kolbenwand in das Gehäuse 8 eingeleitet. Ein Teil der Bremskraft wird durch den spitzen mechanischen Keilwinkel von Hebel H1 an den Kolben des Arbeitszylinders K1 abgeleitet. Der Kraftübertragungsweg durch die Hebel H1, H2 während Bremsbeginn ist hier als gestrichelte weiße Kraftübertragungslinie 16 dargestellt.

Die runde Formgebung der abgerundeten Enden 11 der Hebel H 1 und H2 auf der Ablauffläche 13 ermöglicht einen konstanten mechanischen Grundkeilwinkel unabhängig vom Umfang der horizontalen Belagsauslenkung. Trotz horizontaler Auslenkung der Bremsbeläge 2 während einer Bremsung bleibt der spitze Grundkeilwinkel konstant. Dieser mechanische Grundkeilwinkel sorgt bei aktiver Parkbremse für eine sich in beide Fahrtrichtungen eventuell noch stärker selbst zuziehende Bremse. Das Abrollen der Hebel H1, H2 ermöglicht, wie schon erwähnt, minimale Reibungsverluste.

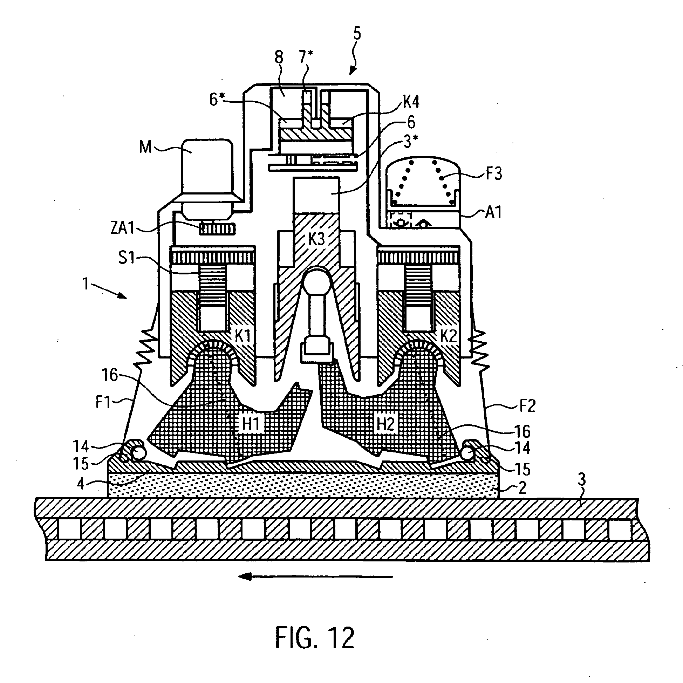

In Fig. 12 ist die Auslenkung des Belags 12 infolge Mitschleifens an der Bremsscheibe 3 zu erkennen.

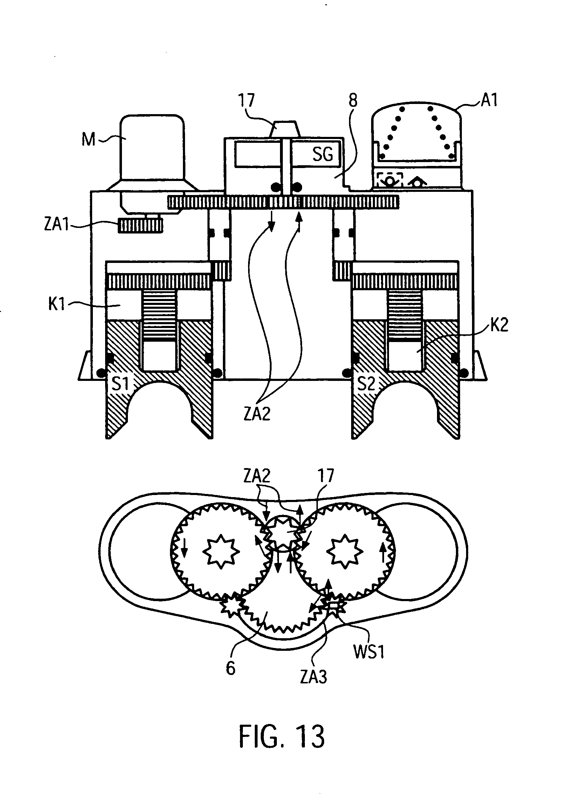

Die Prinzipdarstellung des mechanischen Aufbaus einer Nachstelleinrichtung für Belagverschleiß des zweiten Ausführungsbeispiels nach Fig. 10 zeigt Fig. 13, auf die nun Bezug genommen wird.

Die Spindeln S1, S2 sind hier in diesem Beispiel jeweils mit einem Zahnkranz versehen, der jeweils über eine Getriebezwischenstufe mit einem Antriebsritzel des Hydraulikmotors ZA2 in Eingriff steht. Auch ein Ritzel des Hydraulikmotors ZA3 zum Antrieb der Ventilscheibe 6, die hier auch einen Zahnkranz aufweist, ist hier dargestellt.

Die Getriebeanordnung zum Antrieb der Nachstelleinrichtung 9 befindet sich in diesem Beispiel im Gehäuse 8 der Arbeitseinheit 5 in einer Ebene oberhalb der Arbeitszylinder K1 und K2. Andere Anordnungen sind selbstverständlich möglich.

Durch Betätigen des Zahnradmotors ZA2 können die beiden Spindeln S 1 und S2 über die Nachstelleinrichtung 9 gedreht und ein möglicher Belagverschleiß nachgestellt werden. In Fig. 13 sind die für die Belagverschleißnachstellung wesentlichen Komponenten dargestellt. Auch eine manuelle Notlöseeinrichtung 17 ist in der Fig. 13 zu sehen.

Ob ein Verschleiß des Bremsbelages 2 vorliegt, wird bei jeder Bremsbetätigung über den Vorratsdruck im Vorratsbehälter A1 ermittelt, denn durch einen sinkenden Vorratsdruck wird ein eventueller Verschleiß angezeigt. Somit fungiert der Vorratsbehälter zusätzlich A1 als Sensor für den Belagverschleiß.

Eine Möglichkeit der Belagverschleißnachstellung besteht beispielsweise darin, dass die eigentliche Belagverschleißnachstellung beim Lösen der Parkbremse stattfindet. In der Software des Systems müsste dazu die Anzahl der Spindelumdrehungen, die benötigt werden, um die Parkbremse mit einem ungebrauchten Bremsbelag 2 anzuziehen oder zu lösen, eingebracht sein. Würde nun im Falle eines abgesunkenen Vorratsdruckes die Parkbremse betätigt werden, würde beim Lösen der Parkbremse exakt der in der Software hinterlegte Wert zurückgedreht und der Belagverschleiß nachgestellt werden.

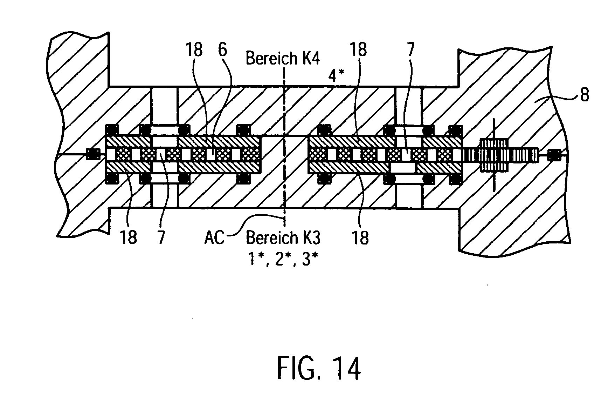

Fig. 14 zeigt eine beispielhafte Schnittdarstellung eines Anordnungsbeispiels der Ventilscheibe 6 zwischen den Kolben K3 und K4 im Gehäuse 8 der Arbeitseinheit 5. Die geometrische Anordnung der Ventilscheibe 6, bzw. des Zahnradantriebs ZA3, befindet sich in horizontaler Lage zwischen Druckverstärkungskolben K4 und Stufenkolben K3. Durchgangslöcher 7 in der Ventilscheibe 6, die hier horizontal und drehbar um eine Achse AC angeordnet ist, ermöglichen in unterschiedlichen Größen einen Durchfluss der Hydraulikflüssigkeit oder eine Sperre zwischen den Kammern 1*, 2*, 3* und 4*. Zwischen der Ventilscheibe 6 und den horizontalen Berührungsflächen des Gehäuses 8 sind in diesem Beispiel Zwischenscheiben 18 angeordnet, durch welche ein Reibwert und die Dichtigkeit beeinflussbar ist. Außerdem ist der komplette Zahnradantrieb ZA3, d.h. Ventilscheibe und Gegenrad, zu erkennen.

Mit Hilfe der drehbaren Ventilscheibe 6 ist es möglich, alle Stellungen der hydraulischen Umschalter V2 bis V7 und auch V 1 mit nur wenigen Elementen darzustellen. Dazu sind auf verschiedenen Kreisbahnen Löcher in einer Scheibe angebracht die speziell angeordnet und kodiert sind. Die Scheibe ist mit einem umlaufenden Zahnkranz verbunden und bildet mit einem Gegenzahnrad den Zahnradantrieb ZA3.

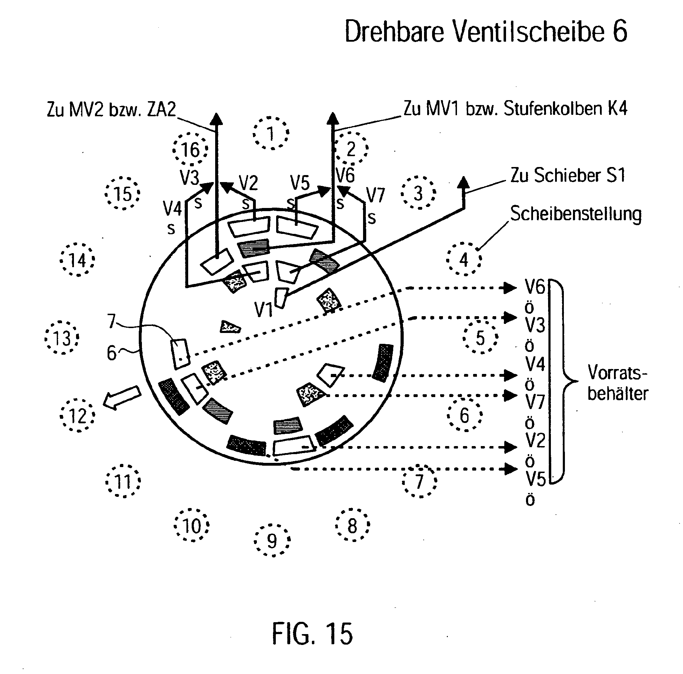

Die Löcher der Ventilscheibe entsprechen in diesem Beispiel auf 4 Kreisbahnen den Funktionen der Umschalter V 1 bis V7, wie in Fig. 15 veranschaulicht ist. Die äußerste Kreisbahn enthält in Form von vier Durchgangslöchern 7 die beiden Umschalter V2 und V5. Die mittlere Kreisbahn enthält mit ebenfalls vier Durchgangslöchern 7 die Umschalter V3 und V6, die folgende Kreisbahn die Umschalter V4 und V7. Die innerste Kreisbahn der Scheibe enthält den Umschalter V1, der für die Betätigung des Schiebers S1, und damit für die Aktivierung der Parkbremse und der Belagnachführung durch Hydraulikmotor ZA2, zuständig ist.

Die drehbare Ventilscheibe besitzt in diesem Beispiel 16 Stellungen, auf die sie jedoch nicht beschränkt ist, wobei jede Stellung für eine andere Umschalterkombination steht. Die Stellungsnummerierung ist in gestrichelten Kreisen angegeben.

In Fig. 15 ist die Ventilscheibe in der Stellung 13, Stellung für langsame Änderungen und einer Sperrstellung gezeigt. Dabei stellen die grauen Vierecke die Löcher in der Ventilscheibe und die offenen Vierecke die Löcher der zu verbindenden Leitungen dar. Das heißt, überdecken sich ein offenes mit einem grauen Viereck, besteht eine Verbindung der Komponenten. In der dargestellten Stellung 12 ist lediglich die Arbeitskammer 2* mit ihren zugeordneten Umschaltern V3 und V6 über MV2 mit der Zahnradpumpe ZA1 verbunden. Solange MV2 in Stellung 0 steht (siehe Fig. 6), ist keine Veränderung der Bremszustellung möglich. Erst nach Aktivierung von MV2 kann mittels der Zahnradpumpe ZA1 eine Bremsverstellung stattfinden. Durch Umschalten des Magnetventils MV2 wird die Ventilscheibe 6 bzw. der Zahnradantrieb ZA3 mit der Zahnradpumpe ZA 1 verbunden und die Ventilscheibe kann gedreht werden. In Abhängigkeit zum jeweils aktuellen Reibwert kann somit die Bremse weiter zugestellt bzw. gelöst werden.

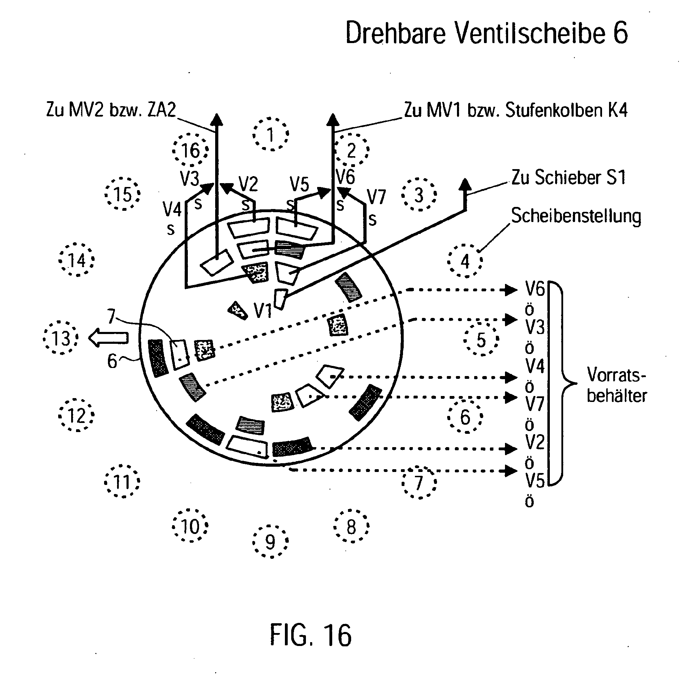

Fig. 16 zeigt eine schematische Darstellung der Ventilscheibe 6 für schnelle Betätigung in Stellung eines ersten Keilwinkels bei dem Beispiel nach Fig. 5. In der hier gezeigten Stellung 13 ist die Arbeitskammer 1* von Stufenkolben K3 mit dem Arbeitsraum 4* von Druckverstärkungskolben K4 verbunden. In Abhängigkeit vom jeweils aktuellen Reibwert kann somit die Bremse weiter zugestellt bzw. gelöst werden. Für langsame Änderungen kann durch Drehen der Ventilscheibe 6 in Richtung der Stellung 12 der Öffnungsquerschnitt kontinuierlich eingestellt werden.

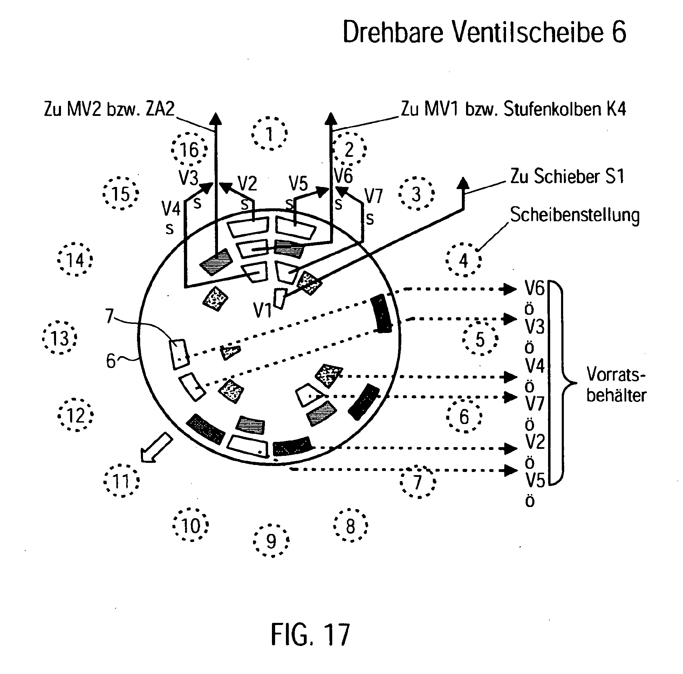

Schließlich zeigt Fig. 17 eine schematische Darstellung der Ventilscheibe 6 für schnelle Betätigung in Stellung eines zweiten Keilwinkels bei dem Beispiel nach Fig. 5. In der hier gezeigten Stellung 11 ist die Arbeitskammer 2* des Stufenkolbens K3 mit dem Arbeitsraum 4* von Druckverstärkungskolben K4 verbunden. Damit kann gegenüber Fig. 15 die Bremse in entgegengesetzter Betätigungsrichtung angesteuert werden. In diesem Beispiel liegt der tatsächlich wirksame Keilwinkel zwischen Keilwinkel 1 und 2. Ist der aktuell wirksame Keilwinkel nahezu identisch mit einer der 7 Keilwinkelstufen, so kann die Steuerung direkt durch die Zahnradpumpe ZA 1 wie in Fig. 6 gezeigt erfolgen.

Die nachfolgende Tabelle 1 zeigt die Anordnung und Reihenfolge der 16 möglichen Schaltstellungen der Ventilscheibe 6. Neben der Wahl des gewünschten Keilwinkels, kann in Stellung 1 und 2 die Feststellbremse betätigt werden. In Tabelle 1, in den Spalten der Schalter V2-V7, sind drei verschiedene Zustände vorhanden. "Gesperrt" bedeutet wie oben bereits erwähnt, dass die betroffenen Schalter durch die Stellung der Ventilscheibe 6 gesperrt sind. "Aus" bedeutet mit dem Vorratsbehälter verbunden. "Ein" hingegen bedeutet mit MV2 bzw. ZA2 verbunden.

Tabelle 1: Schaltstellungen der Ventilscheibe

| Scheibenstellung | Funktion | Keilwinkel KW | Schalter V2 V3 V4 | Schalter V5 V6 V7 |
|---|---|---|---|---|
| 16 | Zahnradmotor ZA2 Ein/Aus Selbsteinzug mittels KW 1 Fest- | - | Alle gesperrt | Aus Aus Aus |
| 1 | stellbremse Betätigen/ Parken | 1 (stumpf) | Ein Ein Ein | Alle gesperrt |
| 2 | Verstellung mit Pumpe KW 1 Feststellbremse Lösen | 1 (stumpf) | Alle gesperrt | Ein Ein Ein |
| 3 | Selbsteinzug mittels KW 2 | 2 | Ein Ein Aus | Alle gesperrt |
| 4 | Verstellung mit Pumpe KW 2 | 2 | Alle gesperrt | Ein Ein Aus |
| 5 | Selbsteinzug mittels KW 2 | 3 | Ein Aus Ein | Alle gesperrt |
| 6 | Verstellung mit Pumpe KW 2 | 3 | Alle gesperrt | Ein Aus Ein |
| 7 | Selbsteinzug mittels KW 2 | 4 | Ein Aus Aus | Alle gesperrt |
| 8 | Verstellung mit Pumpe KW 2 | 4 | Alle gesperrt | Ein Aus Aus |
| 9 | Selbsteinzug mittels KW 2 | 5 | Aus Ein Ein | Alle gesperrt |
| 10 | Verstellung mit Pumpe KW 2 | 5 | Alle gesperrt | Aus Ein Ein |
| 11 | Selbsteinzug mittels KW 2 | 6 | Aus Ein Aus | Alle gesperrt |
| 12 | Verstellung mit Pumpe KW 2 | 6 | Alle gesperrt | Aus Ein Aus |
| 13 | Selbsteinzug mittels KW 2 | 7 | Aus Aus Ein | Alle gesperrt |
| 14 | Verstellung mit Pumpe KW 2 | 7 | Alle gesperrt | Aus Aus Ein |
| 15 | Selbsteinzug mittels KW 8 (Nur Keilwinkel des Hebels wirksam) | 8 (spitz) | Aus Aus Aus | Alle gesperrt |
| 16 | Zahnradmotor ZA2 Ein/Aus | - | Alle gesperrt | Aus Aus Aus |

Welche Komponenten die einzelnen Schalter miteinander verbinden, ist den Figuren 15, 16, 17 zu sehen. In Stellung 15 ist lediglich der spitze Keilwinkel der Hebel H1, H2 wirksam. Die Kolben der Arbeitszylinder K1, K2 werden dabei zur Erhöhung des Keilwinkels nicht verstellt.

Somit ergeben sich einzeln oder in Kombination folgende Eigenschaften und Vorteile:

- Bremskrafterzeugung nach dem Keileinzugprinzip sowie elektromotorischer Antrieb

- Kraftübertragung hydraulisch mittels Bremsflüssigkeit
- Festsattel mit beidseitig adaptiver Belagverschleißnachführung
- Verschleißnachführung auch für rückseitige Beläge ohne zusätzlichen Motor
- Lange Wartungsintervalle für Bremsflüssigkeitswechsel (5 bis 10 Jahre durch Verhinderung von Wasseraufnahme laut Hersteller)
- Wartungsintervalle der Bremsflüssigkeit zusammen mit Belagwechsel möglich
- Keilwinkelanpassung auch während aktiver Bremsung möglich
- Mehrstufige Umschaltung mit drehbarer Ventilscheibe ermöglicht 8 verschiedene Keilwinkel im vorliegenden Ausführungsbeispiel
- Kompakter Aufbau
- Verwendung eines relativ kleinen Elektromotors mit entsprechender Leistung
- Kraftumsetzung Motor/Hydraulik durch Zahnradpumpe ohne Untersetzungsgetriebe
- Einfache Kraftmessung durch Drucksensoren
- Direkte Messung der Zuspannkraft sowie der Bremskraft möglich
- Genaue Messung bzw. Erfassung des Anlegepunkts/Reibepunkts der Bremsbeläge durch Differenzdruckmessung
- Messung des Belagverschleißes ohne zusätzliche Verschleißwegsensoren
- Funktion einer Handbremse (Feststellbremse, Parkbremse) mit Keilkraftverstärkung (selbstblockierend) in beide Bewegungsrichtungen eines Fahrzeugs wirksam

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Der Stufenkolben K3 und/oder der Druckverstärkungskolben K4 der Arbeitseinheit 5 kann weniger oder auch mehr als die im Ausführungsbeispiel angegebenen Abstufungen aufweisen.

Es ist auch denkbar, dass die Ventilscheibe 6 verschiebbar oder in Kombination verschiebbar und drehbar ausgeführt werden kann.

**Bezugszeichenliste**

| | |
|---|---|
| 1 | Zuspannvorrichtung |
| 2 | Bremsbelag |
| 3 | Bremsscheibe |
| 4 | Belagträger |
| 5 | Arbeitseinheit |
| 6 | Ventilscheibe |
| 7 | Durchgangsloch |
| 8 | Gehäuse der Arbeitseinheit |
| 9 | Nachstelleinrichtung |
| 10 | Vorratsdruckkreis |
| 11 | Abgerundetes Ende |
| 12 | Hebelarm |
| 13 | Ablauffläche |
| 14 | Zylinderrolle |
| 15 | Kante |
| 16 | Kraftübertragungslinie |
| 17 | Notlöseeinrichtung |
| 18 | Zwischenscheibe |
| 19,19' | Keil |
| AC | Achse |
| A1 | Vorratsbehälter |
| DS1...3 | Drucksensor |
| F | Kraft |
| F1...3 | Feder |
| Hx...y, H1...2 | Hebel |
| K1...2 | Arbeitszylinder |
| K3 | Stufenkolben |
| K4 | Druckverstärkungskolben |

| M | Elektromotorischer Aktuator |
| MV1 | Notlöseventil |
| MV2 | Umschaltventil |
| RV1...3 | Richtungsventil |
| SV | Schieber |
| S1...2 | Spindel |
| V1 | Schalter zur Belagnachstellung und Parkbremsfunktion |
| V2...7 | Keilwinkelumschalter |
| WS1 | Winkelsensor |
| ZA1 | Pumpe |
| ZA2 | Hydraulikmotor zur Nachstellung und Parkbremsfunktion |
| ZA3 | Hydraulikmotor zum Antrieb Ventilscheibe |
| $\mu$ | Reibwert |
| $\varphi$ | Keilwinkel |
| 1*, 2*, 3* | Arbeitskammer Stufenkolben |
| 4*, 5* | Arbeitskammer Druckverstärkutigskolben |
| 6*, 7* | Hochdruckkammern Druckverstärkungskolben |

**Patentansprüche**

1. Scheibenbremse mit elektromotorischem Aktuator (M), der auf eine Zuspannvorrichtung (1) zum Zuspannen wenigstens eines Bremsbelages (2) in Richtung einer Bremsscheibe (3) einwirkt, wobei die Zuspannvorrichtung (1) eine bremseninterne Hydraulikanordnung mit wenigstens einem, vorzugsweise zwei Arbeitszylindern (K1, K2) aufweist und in selbstverstärkender Bauart ausgelegt ist, wobei der Bremsbelag (2) unter einem Keilwinkel an der Zuspannvorrichtung (1) abgestützt ist, wobei die Hydraulikanordnung ferner eine Arbeitseinheit (5) zur Keilwinkelumschaltung des Keilwinkels aufweist, unter dem der Bremsbelag (2) an der Zuspannvorrichtung (1) abgestützt ist, **dadurch gekennzeichnet, dass** die Arbeitseinheit (5) eine verstellbare Ventilscheibe (6) aufweist.

2. Scheibenbremse nach Anspruch 1, **dadurch gekennzeichnet, dass** die verstellbare Ventilscheibe (6) drehbar ausgebildet ist und zumindest auf einer Kreisbahn Durchgangslöcher zur Keilwinkelumschaltung aufweist.

3. Scheibenbremse nach Anspruch 2, **dadurch gekennzeichnet, dass** die drehbare Ventilscheibe (6) in der Arbeitseinheit (5) zwischen einem Stufenkolben (K3) und einem Druckverstärkungskolben (K4) zur steuerbaren Verbindung von Arbeitskammern dieser Kolben (K3, K4) untereinander und/oder mit Hydraulikleitungen der Hydraulikanordnung angeordnet ist.

4. Scheibenbremse nach einem der vorstehenden Ansprüche, **dadurch gekennzeichnet, dass** die Scheibenbremse eine Nachstelleinrichtung (9) mit Parkbremsfunktion und einer mechanischen Notlösefunktion aufweist.

5. Scheibenbremse nach einem der vorstehenden Ansprüche, **dadurch gekennzeichnet, dass** die Zuspannvorrichtung (1) eine mit dem elektromotorischen Aktuator (M) gekoppelte Pumpe (ZA1) aufweist, die Bestandteil der Hydraulikanordnung ist.

6. Scheibenbremse nach Anspruch 5, **dadurch gekennzeichnet, dass** die Pumpe (ZA1) mit einem Hydraulikmotor (ZA3) zum Antrieb der Ventilscheibe (6) oder mit der Arbeitseinheit (5) zur direkten Bremszustellung mittels eines steuerbaren Ventils (MV2) hydraulisch koppelbar ausgebildet ist.

7. Scheibenbremse nach Anspruch 5 oder 6, **dadurch gekennzeichnet, dass** die Ventilscheibe (6) zur Steuerung zumindest einer hydraulischen Kopplung der Pumpe (ZA 1) mit einem Hydraulikmotor (ZA2) für die Nachstelleinrichtung (9) ausgebildet ist.

8. Scheibenbremse nach einem der vorstehenden Ansprüche, **dadurch gekennzeichnet, dass** die Scheibenbremse Sensoren, vorzugsweise Drucksensoren (DS1, DS2, DS3) zur Erfassung von Zuspannkraft und Bremskraft, sowie des Bremsbelagverschleißes und ggf. weiterer möglicher Messgrößen aufweist.

9. Scheibenbremse nach einem der vorstehenden Ansprüche, **dadurch gekennzeichnet, dass** die Hydraulikanordnung einen Vorratsdruckkreis (10) mit Ausdehnungsgefäß (A1) und zumindest einem steuerbaren Ventil (MV1) zur Lösung der Scheibenbremse im Fehlerfall aufweist.

**10.** Scheibenbremse nach einem der vorstehenden Ansprüche, **gekennzeichnet durch** eine Steuerungseinrichtung, insbesondere eine Steuerungseinheit, die entweder direkt an der Scheibenbremse angeordnet ist oder als sonstige Steuerungseinrichtung eines übergeordneten Steuerungssystem ausgelegt ist, die zumindest zur Steuerung der Ventilscheibe (6) zur Keilwinkelumschaltung bei einer Bremsung ausgebildet ist.

**11.** Scheibenbremse mit elektromotorischem Aktuator (M) nach einem der vorstehenden Ansprüche, wobei die Zuspannvorrichtung (1) eine Hebelanordnung mit wenigstens einem oder mehreren Hebel(n) (H1, H2) zur Wirkungsverbindung mit dem wenigstens einen Bremsbelag (2) aufweist, **dadurch gekennzeichnet, dass** der wenigstens eine Hebel (H1, H2) eine V-förmige Ausgestaltung aufweist, derart, dass er jeweils mit zwei abgerundeten Enden (11) am Bremsbelag (2) und jeweils mit einem abgerundeten Ende (11) an einem Gegenlager verschwenkbar gelagert ist.

**12.** Scheibenbremse nach Anspruch 11, **dadurch gekennzeichnet, dass** das Gegenlager ein Arbeitszylinder (K1, K2) einer Hydraulikanordnung ist.

**13.** Scheibenbremse nach Anspruch 11 oder 12, **dadurch gekennzeichnet, dass** die zwei abgerundete Enden (11) des wenigstens einen Hebels (H1, H2) auf zueinander geneigten Ablaufflächen (13) des Bremsbelags (2) oder eines Belaghalters (4) des Bremsbelags (2) abrollbar gelagert sind.

**14.** Scheibenbremse nach einem der vorstehenden Ansprüche 11 bis 13, **dadurch gekennzeichnet, dass** die Hebel (H1, H2) jeweils einen Hebelarm (12) zur Zusammenwirkung mit der Arbeitseinheit (5) aufweisen.

**Claims**

**1.** Disc brake comprising an electromotive actuator (M) that acts upon a brake application unit (1) for applying at least one brake lining (2) in a direction towards a brake disc (3), with said brake application unit (1) including a hydraulic system internal of the brake, which is provided with one, preferably two, operating cylinder(s) (K1, K2) and is configured in a self-energising structure, wherein said brake lining (2) is supported at a wedge angle on said brake application unit (1), with said hydraulic system furthermore including an operating unit (5) for wedge angle reversal of said wedge angle by which said brake lining (2) is supported on said brake application unit (1), **characterised in that** said operating unit (5) comprises an adjustable valve disc (6).

**2.** Disc brake according to Claim 1, **characterised in that** said adjustable valve disc (6) is of a rotating design and is provided with through-holes for wedge-angle reversal at least on one circular path.

**3.** Disc brake according to Claim 2, **characterised in that** said rotatable valve disc (6) is disposed in said operating unit (5) between a stepped piston (K3) and a pressure-amplifying piston (K4) for controllable connection of working chambers of these pistons (K3, K4) with each other and/or with hydraulic lines of said hydraulic system.

**4.** Disc brake according to any of the preceding Claims, **characterised in that** the disc brake comprises a readjustment means (9) with a parking brake function and a mechanical emergency release function.

**5.** Disc brake according to any of the preceding Claims, **characterised in that** said brake application unit (1) comprises a pump (ZA1) coupled to said electromotive actuator (M), which is a component of said hydraulic system.

**6.** Disc brake according to Claim 5, **characterised in that** said pump (ZA1) is configured for hydraulic coupling to a hydraulic motor (ZA3) for driving said valve disc (6) or to said operating unit (5) for direct brake application by means of a controllable valve (MV2).

**7.** Disc brake according to Claim 5 or 6, **characterised in that** said valve disc (6) is configured such that it comprises a hydraulic motor (ZA2) for said readjustment means (9) for controlling at least one hydraulic coupler of said pump (ZA1).

**8.** Disc brake according to any of the preceding Claims, **characterised in that** the disc brake comprises sensors, preferably pressure sensors (DS1, DS2, DS3) for the detection of the brake application force and the braking force as well as of the wear on said brake lining and possibly further potential measurands.

9.  Disc brake according to any of the preceding Claims, **characterised in that** said hydraulic system comprises a supply pressure circuit (10) with an expansion vessel (A1) and at least one controllable valve (MV1) for releasing the disc brake in the event of failure.

10. Disc brake according to any of the preceding Claims, **characterised by** a controller means, in particular a controller unit that is either disposed on the disc brake directly or designed as other controlling means of a higher-ranking control system, which is configured at least for controlling said valve disc (6) for wedge angle reversal in the event of a brake application cycle.

11. Disc brake comprising an electromotive actuator (M) according to any of the preceding Claims, wherein said brake application unit (1) comprises a lever system including at least one or several lever(s) (H1, H2) for operative connection to at least one brake lining (2), **characterised in that** said at least one lever (H1, H2) presents a V-shaped configuration such that it is pivotally supported by two respective rounded-off ends (11) on said brake lining (2) and by one respective rounded-off end (11) on a thrust-pad bearing.

12. Disc brake according to Claim 11, **characterised in that** said thrust-pad bearing is a working cylinder (K1, K2) of a hydraulic system.

13. Disc brake according to Claim 11 or 12, **characterised in that** said two rounded-off ends (11) of said at least one lever (H1, H2) are supported to roll on running surfaces (13) of said brake lining (2) or a lining holder (4) of said brake lining (2), which are inclined relative to each other.

14. Disc brake according to any of the preceding Claims, **characterised in that** said levers (H1, H2) comprise each one respective lever arm (12) for cooperation with said operating unit (5).

**Revendications**

1.  Frein à disque comprenant un actionneur électromoteur (M), qui agit sur une unité d'actionnement du frein (1) afin de porter au moins une garniture de frein (2) en une direction vers un disque de frein (3), à ladite unité d'actionnement du frein (1) renfermant un système hydraulique à l'intérieur du frein, qui est muni d'un, de préférence deux, cylindre(s) de travail (K1, K2) et est configuré en une structure à renfort automatique, dans lequel ladite garniture de frein (2) s'appuie à un angle en V à ladite unité d'actionnement du frein (1), audit système hydraulique renferment, au plus, une unité de travail (5) pour la commutation en l'angle en V dudit angle en V, auquel ladite garniture de frein (2) s'appuie à ladite unité d'actionnement du frein (1), **caractérisé en ce que** ladite unité de travail (5) comprend un disque de soupape ajustable (6).

2.  Frein à disque selon la revendication 1, **caractérisé en ce que** ledit disque de soupape ajustable (6) a une configuration rotative et est muni des passages pour la commutation en l'angle en V au moins selon une voie circulaire.

3.  Frein à disque selon la revendication 2, **caractérisé en ce que** ledit disque de soupape rotatif (6) est disposé dans ladite unité de travail (5) entre un piston à gradins (K3) et un piston amplificateur de pression (K4) pour la connexion commandable des chambres de travail de ces pistons (K3, K4) l'une à l'autre et/ou à des conduits hydrauliques dudit système hydraulique.

4.  Frein à disque selon une quelconque des revendications précédentes, **caractérisé en ce que** le frein à disque comprend un moyen de rattrapage (9) ayant une fonction de frein de stationnement et une fonction de desserrage de secours mécanique.

5.  Frein à disque selon une quelconque des revendications précédentes, **caractérisé en ce que** ladite unité d'actionnement du frein (1) comprend une pompe (ZA1) jumelé audit actionneur électromoteur (M), qui constitue un composant dudit système hydraulique.

6.  Frein à disque selon la revendication 5, **caractérisé en ce que** ladite pompe (ZA1) est configurée pour l'accouplement hydraulique à un moteur hydraulique (ZA3) pour l'entraînement dudit disque de soupape (6) ou à ladite unité de travail (5) pour le serrage du frein directe moyennant une soupape commandable (MV2).

7.  Frein à disque selon la revendication 5 ou 6, **caractérisé en ce que** ledit disque de soupape (6) est configuré en une telle manière, qu'il comprenne un moteur hydraulique (ZA2) pour ledit moyen de rattrapage (9) afin de commander au moins un coupleur hydraulique de ladite pompe (ZA1).

8.  Frein à disque selon une quelconque des revendications précédentes, **caractérisé en ce que** le frein à disque comprend des détecteurs, de préférence des détecteurs de pression (DS1, DS2, DS3) pour la détection de l'effort de serrage du frein et l'effort de freinage, ainsi que de l'usure à ladite garniture de frein et des autre grandeurs potentielles à mesurer en cas de besoin.

9.  Frein à disque selon une quelconque des revendications précédentes, **caractérisé en ce que** ledit système hydraulique comprend un circuit de pression de réserve (10) à un récipient d'expansion (A1) et au moins une soupape commandable (MV1) pour de desserrage du frein à disque au cas de défaillance.

10. Frein à disque selon une quelconque des revendications précédentes, **caractérisé par** un moyen de commande, en particulier une unité de commande, qui est disposée au frein à disque directement ou qui est conçue sous forme d'un moyen de commande d'un système de commande prioritaire configuré au moins pour la commande dudit disque de soupape (6) pour la commutation en angle en V au cas d'un cycle de serrage du frein.

11. Frein à disque comprenant an actionneur électromoteur (M) selon une quelconque des revendications précédentes, dans lequel ladite unité d'actionnement du frein (1) comprend un système à leviers, qui renferme au moins un ou plusieurs levier(s) (H1, H2) pour la connexion d'action à au moins une garniture de frein (2), **caractérisé en ce que** ledit au moins un levier (H1, H2) présente une configuration en V, qui s'appuie de façon pivotable par deux extrémités arrondies respectives (11) à ladite garniture de frein (2) et par une extrémité arrondie respective (11) à un palier support.

12. Frein à disque selon la revendication 11, **caractérisé en ce que** ledit palier support est un cylindre de travail (K1, K2) d'un système hydraulique.

13. Frein à disque selon la revendication 11 ou 12, **caractérisé en ce que** lesdites extrémités arrondies (11) dudit au moins un levier (H1, H2) s'appuient d'une manière, qu'elles roulent sur des surfaces de roulement (13) de ladite garniture de frein (2) ou d'un support de garniture de frein (4) de ladite garniture de frein (2), qui sont inclinées l'une relativement à l'autre.

14. Frein à disque selon une quelconque des revendications précédentes, **caractérisé en ce que** chacun desdits leviers (H1, H2) comprend un bras de levier respectif (12) pour l'interaction avec ladite unité de travail (5).

FIG. 1a

FIG. 1b

FIG. 1c

FIG. 2

FIG. 3

FIG. 4

EP 2 102 524 B1

FIG. 5

22

FIG. 6

FIG. 7

FIG. 8

FIG. 9

FIG. 10

FIG. 11

FIG. 12

FIG. 13

FIG. 14

Drehbare Ventilscheibe 6

Zu MV2 bzw. ZA2
Zu MV1 bzw. Stufenkolben K4

Zu Schieber S1

Scheibenstellung

V3 V2 V5 V6 V7
V4

V1

7
6

V6
ö
V3
ö
V4
ö
V7
ö
V2
ö
V5
ö

Vorratsbehälter

FIG. 15

EP 2 102 524 B1

## Drehbare Ventilscheibe 6

Zu MV2 bzw. ZA2 — Zu MV1 bzw. Stufenkolben K4

Zu Schieber S1

Scheibenstellung

Vorratsbehälter

V3 V2 V5 V6 V7
V4

s s s s s

V1

**FIG. 16**

33

Drehbare Ventilscheibe 6

FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10105752 A1
- DE 10324424 A1
- US 4435021 A
- DE 19527936 A1
- DE 10105540 A1